# EUROPÄISCHE PATENTSCHRIFT

(11) **EP 0 673 592 B1**
(45) Veröffentlichungstag und Bekanntmachung des Hinweises auf die Patenterteilung: **30.09.1998**
(21) Anmeldenummer: 95103563.3
(22) Anmeldetag: 13.03.1995
(51) Int. Cl.: A01C 5/06

(54) **Sämaschine mit zwei eine Furche schneidenden Scheiben und zwei diesen benachbarten Spurrädern**
Sowing machine with two furrow-opening discs and two associated gauge wheels
Semoir avec deux disques ouvrant un sillon et deux roues de jauge correspondantes

(30) Priorität: 25.03.1994 US 218095
(43) Veröffentlichungstag der Anmeldung: 27.09.1995
(73) Patentinhaber: Deere & Company, Moline, Illinois 61265-8098 (US)
(72) Erfinder: Ege, Frank Emil, Moline, Illinois 61265 (US)
(74) Vertreter: Feldmann, Bernhard

(56) Entgegenhaltungen:
- EP-A- 0 170 140
- US-A- 4 009 668
- US-A- 4 760 806
- US-A- 5 235 922

## Beschreibung

Die Erfindung bezieht sich auf eine Sämaschine mit einem Auslegerrahmen zwei sich gegenüberliegenden und eine Furche schneidenden Scheiben, die an dem Auslegerrahmen an sich schneidenden Achsen oder Wellen derart angeordnet sind, daß sie von einem vor und unterhalb der Achsen liegenden Berührungspunkt nach oben und rückwärts divergieren, und mit zwei Spurrädern, von denen jeweils eins einer Scheibe benachbart ist und an dem Ende eines Lenkers um eine Achse umläuft, die rückwärtig und parallel oder annähernd parallel der zugehörigen Scheibenachse verläuft, wobei das andere Ende eines jeden Lenkers an dem Auslegerrahmen angeschlossen ist.

Diese Sämaschine (US-A-4 009 668) ist als Einzelkornsämaschine ausgebildet, d. h. sie ist mit einer Dosiervorrichtung ausgestattet, die einzelne Samenkörner oder einzelnes Pflanzgut einem Saatgutbehälter entnimmt und auf den Ackerboden in gleichmäßigen Abstand und gleichmäßiger Tiefe ablegt. Die gleichmäßige Ablage ist für den späteren Keimungsprozeß von besonderer Bedeutung. Die Spurräder dienen als Tiefenführung, über die die Tiefe der von den Scheiben geschnittene Furche bestimmt wird. Die Spurräder sind den Scheiben zugeordnet, laufen auf den Furchenrändern und haben zusätzlich die Aufgabe, die Furchenränder nach dem Furchenziehen fest zu drücken, damit kein Erdreich nach dem Furchenziehen in die Furche zurückfällt. Die Spurräder sind dabei so angeordnet, daß sie mit ihrer Peripherie außerdem die zugeordneten Scheiben berühren oder zu diesen geringfügigen Abstand aufweisen, damit sie bei einem Austreten der Scheiben aus dem Erdboden an diesen eventuell anhaftende Erde abstreichen. Diese fällt dann auf den Furchenrand und wird von den Spurrädern fest gedrückt. Somit ist sichergestellt, daß eine saubere Furche gezogen wird, in die kein Erdreich zurückfallen kann, wodurch die gleichmäßige Ablage gewährleistet wird. Insbesondere im Berührungsbereich mit den Scheiben unterliegen die Spurräder aber einem erhöhten Verschleiß. Die Spurräder müssen daher öfters nachgestellt werden, damit sich zwischen Scheiben und Spurrädern keine Erde oder keine Pflanzenrückstände ansammeln, wodurch das Ziehen einer einwandfreien Furche beeinträchtigt würde. Bei der bekannten Maschine dienen zum richtigen Einstellen des Querabstandes zwischen Scheibe und zugehörigem Spurrad Scheiben, die der Lagerstelle der die Spurräder mit dem Rahmen verbindenden Lenker hinzugefügt werden bzw. von dieser entfernt werden müssen. Hierzu muß die betreffende Lagerstelle auseinandergebaut und der zugehörige Lenker gegebenenfalls abgebaut werden, was natürlich zeitaufwendig ist. Die richtige Abstandseinstellung gestaltet sich auch nicht einfach.

Die mit der Erfindung zu lösende Aufgabe wird darin gesehen, die Abstandseinstellung einfacher zu gestalten, weshalb vorgesehen ist, daß der Auslegerrahmen zum Anschluß des anderen Endes eines jeden Lenkers mit einer Welle versehen ist, deren Achse parallel zur Umlaufachse des jeweiligen Spurrades angeordnet ist und die eine mit Außengewinde versehene Buchse drehbar aufnimmt, wobei die Buchse auf der Welle gegen Drehen wahlweise festsetzbar ist und das Außengewinde der Buchse mit einem Innengewinde in Eingriff steht, das in einer Bohrung des an den Auslegerrahmen anschließbaren Lenkerendes des Spurrades vorgesehen ist. Auf diese Weise braucht zur Abstandsveränderung lediglich die Drehsperrung der mit Außengewinde versehenen Buchse aufgehoben zu werden, woraufhin diese Buchse auf der den Lenker mit dem Rahmen verbindenden Welle gedreht werden kann und sich der Lenker mit dem an seinem anderen Ende angeschlossenen Spurrad auf die zugehörige Scheibe zu oder von dieser fort verstellt.

Die Buchse kann in einfacher Weise gegen Drehen festgesetzt werden bzw. wieder drehfrei werden, wenn nach einem weiteren Vorschlag der Erfindung die zum Anschluß des Lenkers an den Auslegerrahmen dienende Welle einenends mit Gewinde zum Einschrauben in den Auslegerrahmen oder in eine mit dem Auslegerrahmen verbundene Abstützung und anderenends mit einem Kopf versehen ist, der gegen die mit Außengewinde versehene Buchse anliegt und diese im verspannten Zustand gegen den Auslegerrahmen oder die Abstützung preßt, wodurch die Buchse gegen Drehen blockiert ist. Diese Drehsperre wird dann wieder gelöst, wenn die Welle im entgegengesetzten Drehsinn betätigt wird. Dies kann ebenso, wie das Festspannen der Buchse durch einen Schraubenschlüssel erfolgen, wenn der Kopf der Welle entsprechend ausgebildet ist.

Nach Lösen der Drehsperre kann die mit Außengewinde versehene Buchse ebenfalls leicht gedreht werden, wenn sie an ihrem dem Kopf der Welle zugelegenen Ende mit einem Drehkopf versehen ist, der ein Sechskant sein kann.

Zweckmäßig kann die mit Außengewinde versehene Buchse eine größere Länge als die mit Innengewinde versehene Bohrung aufweisen.

In der Zeichnung ist ein nachfolgend näher erläutertes Ausführungsbeispiel der Erfindung dargestellt. Es zeigt:
- Fig. 1: eine teilweise dargestellte Reiheneinheit einer Einzelkornsämaschine in Seitenansicht;
- Fig. 2: einen Furchenöffner mit Tiefenführung in Arbeitsstellung und
- Fig. 3: eine Einstellvorrichtung für ein Spurrad der Tiefenführung im Schnitt.

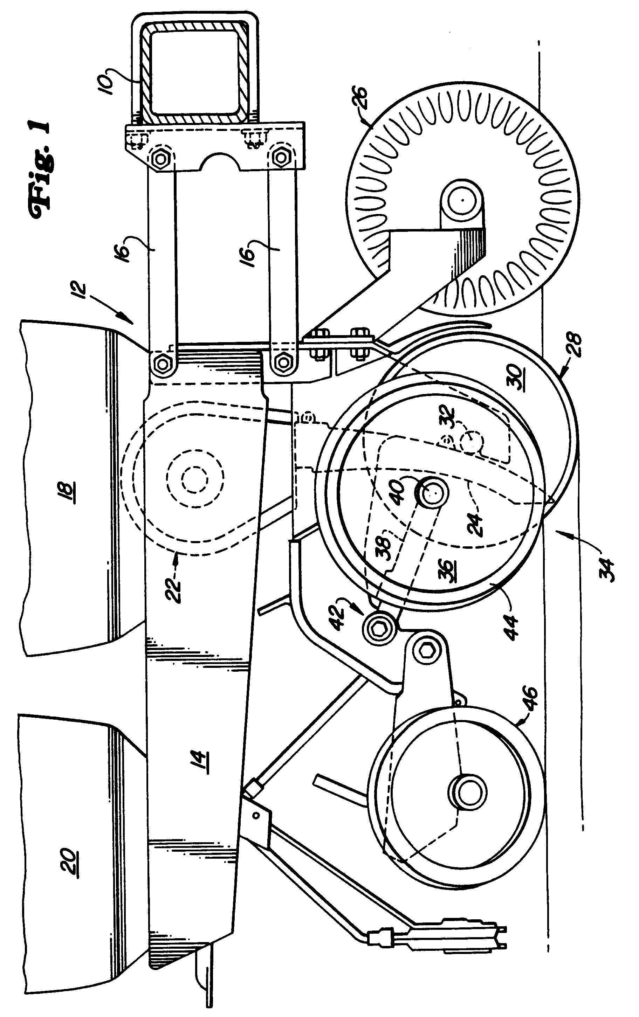

Die Erfindung findet an einem in Fig. 1 der Zeichnung dargestellten Einzelkornsägerät Verwendung, das einen in Fig. 1 nur teilweise dargestellten und zur Arbeitsrichtung quer verlaufenden Hauptrahmen 10 aufweist. Ein solcher Hauptrahmen ist in bekannter Weise an einen ziehenden Schlepper anschließbar und nimmt eine Vielzahl von nebeneinander mit gegenseitigem Abstand angeordneten Reiheneinheiten 12 auf. Jede Reiheneinheit 12 hat einen Auslegerrahmen 14, der unabhängig von dem benachbarten Auslegerrahmen über zwei sich in Arbeitsrichtung erstreckende Lenker 16 an dem Hauptrahmen 10 höhenbeweglich angeschlossen ist. In Fig. 1 der Zeichnung ist nur eine einzige Reiheneinheit dargestellt, und, wie es allgemein bekannt ist, weist jede Reiheneinheit 12 einen Saatgutbehälter 18 und einen Düngerbehälter 20 auf, die auf dem Auslegerrahmen 14 angeordnet sind. Des weiteren hat jede Reiheneinheit 12 eine Dosiereinrichtung 22, die Saatgut aus dem Saatgutbehälter übernimmt und es einzeln über ein Saatrohr 24 in gleichmäßigen Abständen auf den Boden ablegt.

Eine Bearbeitungsvorrichtung 26 ist an jeder Reiheneinheit, in Arbeitsrichtung gesehen, vor einer Furchenöffnereinrichtung 28 vorgesehen. Jede Furchenöffnereinrichtung 28 weist ein Paar ein V bildender Scheiben 30 auf, die um entsprechend gerichtete Achsen 32 umlaufen oder an solchen Wellen angeordnet sind. Die Achsen oder Wellen schneiden sich derart, damit sich die Scheiben berühren, kurz bevor sie in den Boden einschneiden. Dieser Berührungspunkt liegt mit Bezug auf die Arbeitsrichtung vor den Achsen 32 oder Wellen und tiefer als diese. Im Arbeitseinsatz schneiden sie daher eine V-förmige Furche in den Boden, wenn die Maschine im Einsatz sich über das Feld bewegt. Zu erwähnen bleibt noch, daß das Saatrohr 24 so gerichtet ist, daß einzelne Saatgutkörner hinter der Scheibenachse in die V-förmige Furche abgelegt werden.

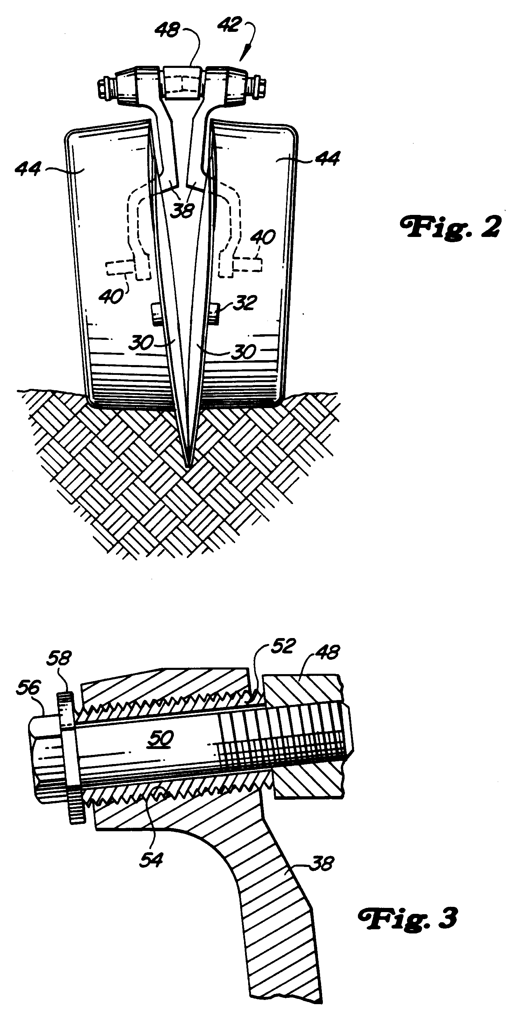

Mit der Furchenöffnereinrichtung 28 arbeitet eine Tiefenführungseinrichtung 34 zusammen. Sie ist im Bereich der Scheiben 30 angeordnet und bestimmt nicht nur die Furchentiefe sondern drückt nach dem Furchenschneiden noch die Furchenränder an, damit Erdreste nicht in die Furche zurückfallen. Außerdem streicht sie an den Scheiben eventuell haftende Erdreste ab, damit auch diese nicht in die Furche zurückfallen oder ein sauberes Furchenschneiden beeinträchtigen. Im einzelnen ist die Tiefenführungseinrichtung 34 durch zwei Spurräder 36 geprägt, die den Scheiben 30 benachbart sind. Die beiden Spurräder 36 sind an dem unteren Ende von einem nach oben und rückwärts gerichteten Lenker 38 oder Lenkern vermittels Wellen 40 gelagert, die die Spurräder 36 drehbar aufnehmen. Das obere Ende eines jeden Lenkers 38 ist an den Auslegerrahmen 14 über eine Anschlußvorrichtung 42 angeschlossen, auf die im nachfolgenden noch näher eingegangen wird. Die Spurräder 36 sind in herkömmlicher Weise mit Gummireifen 44 versehen, die eine glatte Lauffläche haben. Auch die Wellen 40 oder Achsen der Spurräder 36 sind parallel zu den Achsen 32 der Scheiben 30 angeordnet, jedoch mit Bezug auf die Arbeitsrichtung hinter diesen. Durch einen herkömmlichen in der Zeichnung nicht dargestellten verstellbaren Anschlag wird der Stellweg der Spurräder gegenüber dem Auslegerrahmen 14 begrenzt. Da die Spurräder 36 auf der Oberfläche des Ackerbodens ablaufen, wenn sich die Maschine im Einsatz befindet, steuert die vertikale Stellung der Spurräder zu den Scheiben die Furchentiefe, wie es in Fig. 2 angedeutet ist. Die inneren Kanten der Spurrälderreifen 44 liegen gegen die Außenseiten der Scheiben an oder haben zu diesen einen geringfügigen Abstand, und zwar in dem Bereich, in dem die Spurräder den Boden wieder verlassen. Dieser Bereich liegt rückwärtig der Scheibenachsen 32, aber vor den Spurrädervellen 40. Durch diesen Kontakt oder durch diesen geringfügigen Abstand wird der eingangs dieses Absatzes erwähnte Reinigungseffekt erzielt. In diesem Bereich von den Scheiben abgelöstes Erdreich wird durch die Spurräder glattgewalzt. Über konische Druckrollen 46, die unmittelbar hinter der Tiefenführungseinrichtung 34 vorgesehen sind, wird die Furche wieder geschlossen.

Die Anschlußvorrichtung 42 für die Tiefenführungseinrichtung 34 weist eine zentrale Abstützung 48 auf, die an den Auslegerrahmen 14 angeschlossen ist und zwei im wesentlichen horizontal verlaufende Wellen 50 aufnimmt, die sich von gegenüberliegenden Seiten der Abstützung 48 aus nach außen erstrecken. Die Wellen sind als lange Schrauben ausgebildet, sind in Bohrungen der Abstützung 48 eingeschraubt und erstrecken sich von der Abstützung 48 aus leicht nach unten, so daß die Achsen einer jeden Welle 50 im wesentlichen parallel zu den an den unteren Enden der Lenker 38 vorgesehenen Wellen 40 der Spurräder 36 verlaufen. Auf jeder als Schraube ausgebildeten Welle 50 ist eine mit Außengewinde versehene Buchse 52 angeordnet, deren inneren Enden gegen die jeweilige Stirnseite der Abstützung 48 anliegen. Das obere Ende eines jeden Spurradlenkers 38 ist mit einer mit Innengewinde versehenen Bohrung 54 ausgerüstet, deren Gewinde in das Außengewinde an der Buchse 52 eingreift. Auf diese Weise kann durch einfaches Drehen der Buchse 52 der Spurradlenker 38 nach innen oder nach außen in Abhängigkeit von der Drehrichtung verstellt werden.

Das außen liegende Ende einer jeden schraubenähnlich ausgebildeten Welle 50 ist als Schraubenkopf 56 ausgebildet, der im verspannten oder fest angezogenen Zustand fest gegen das ihm zugelegene Ende der Buchse 52 anliegt, so daß die Buchse gegen die entsprechende Stirnseite der Abstützung 48 anliegt bzw. zwischen Schraubenkopf und der Stirnseite der Abstützung fest eingeklemmt ist, so daß die Buchse 52 gegenüber der Welle 50 dann keine Drehbewegung ausführen kann. Wird dagegen die Welle 50 gelockert, so kann die Buchse 52 auf der Welle 50 drehen. Die Buchse 52 hat eine größere Länge als die Bohrung 54 und steht zumindest an dem der Abstützung abgelegenen Ende über die Bohrung 54 über, so daß an dem überstehenden Teil leicht noch ein Sechskantkopf 58 an der Buchse 54 vorgesehen werden kann. Dieser erleichtert das Drehen über einen entsprechenden Schlüssel. Auf diese Weise kann die seitliche Stellung eines jeden Spurradlenkers 38 und dementsprechend der Abstand eines jeden Spurrades 36 zu der zugehörigen Scheibe 30 leicht eingestellt werden, wenn beispielsweise Verschleiß aufgetreten ist. Man braucht lediglich die Welle 50 zu lockern und die Buchse 52 zu drehen, worauf sich der Spurradlenker in seine neue Position verstellt.

## Patentansprüche

1. Sämaschine mit einem Auslegerrahmen (14), zwei sich gegenüberliegenden und eine Furche schneidenden Scheiben (30) die an dem Auslegerrahmen (14) an sich schneidenden Achsen (32) oder Wellen derart angeordnet sind, daß sie von einem vor und unterhalb der Achsen (32) liegenden Berührungspunkt nach oben und rückwärts divergieren, und mit zwei Spurrädern (36), von denen jeweils eins einer Scheibe (30) benachbart ist und an dem Ende eines Lenkers (38) um eine Achse (40) umläuft, die rückwärtig und parallel oder annähernd parallel der zugehörigen Scheibenachse (32) verläuft, wobei das andere Ende eines jeden Lenkers (38) an dem Auslegerrahmen (14) angeschlossen ist, dadurch gekennzeichnet, daß der Auslegerrahmen (14) zum Anschluß des anderen Endes eines jeden Lenkers (38) mit einer Welle (50) versehen ist, deren Achse parallel zur Umlaufachse (40) des jeweiligen Spurrades (36) angeordnet ist und die eine mit Außengewinde versehene Buchse (52) drehbar aufnimmt, wobei die Buchse (52) auf der Welle (50) gegen ein Drehen gegenüber der Welle (50) festsetzbar ist und das Außengewinde der Buchse (52) mit einem Innengewinde in Eingriff steht, das in einer Bohrung (54) des an den Auslegerrahmen (14) anschließbaren Lenkerendes des Spurrades (36) vorgesehen ist.

2. Sämaschine nach Anspruch 1, dadurch gekennzeichnet, daß die zum Anschluß des Lenkers (38) an den Auslegerrahmen (14) dienende Welle (50) einenends mit Gewinde zum Einschrauben in den Auslegerrahmen (14) oder in eine mit dem Auslegerrahmen (14) verbundene Abstützung (48) und anderenends mit einem Kopf (56) versehen ist, der gegen die mit Außengewinde versehene Buchse (52) anliegt und diese im verspannten Zustand gegen den Auslegerrahmen (14) oder die Abstützung (48) preßt.

3. Sämaschine nach Anspruch 2, dadurch gekennzeichnet, daß die mit Außengewinde versehene Buchse (52) an ihrem dem Kopf (56) der Welle zugelegenen Ende mit einem Drehkopf (58) versehen ist.

4. Sämaschine nach Anspruch 1, dadurch gekennzeichnet, daß die mit Außengewinde versehene Buchse (52) eine größere Länge als die mit Innengewinde versehene Bohrung (54) aufweist.

## Claims

1. A seed drill with a outrigger frame (14), two opposed discs (30) cutting a furrow, which are so arranged on the outrigger frame (14) with intersecting axes (32) or shafts, that they diverge upwardly and to the rear from a point of contact lying in front of and below the axes (32), and with two tracking wheels (36), each of which is adjacent to a disc (30) and revolves about an axis (40) at the end of a link (38), which axis is to the rear of and parallel or approximately parallel to the corresponding disc axis (32), wherein the other end of each link (38) is attached to the outrigger frame (14), characterized in that the outrigger frame (14) is provided with a shaft (50) for attachment of the other end of each link (38), with its axis parallel to the axis (40) about which the respective tracking wheel (36) revolves and which receives rotatably a bush (52) with an external thread, wherein the bush (52) can be fixed on the shaft (50) fixed non-rotatably relative to the shaft (50) and the external thread of the bush (52) engages with an internal thread which is provided in a bore (54) of the end of the link of the tracking wheel (36) which can be attached to the outrigger frame (14).

2. A seed drill according to claim 1, characterized in that the shaft (50) serving for attachment of the link (38) to the outrigger frame (14) is provided at one end with a thread for screwing into the outrigger frame (14) or into a support (48) attached to the outrigger frame (14), and at the other end with a head (56) which bears against the bush (52) provided with an external thread and presses this under stress against the outrigger frame (14) or the support (48).

3. A seed drill according to claim 2, characterized in that the bush (52) with an external thread is provided at the end adjacent the head (56) of the shaft with a head (58) for turning it.

4. A seed drill according to claim 1, characterized in that the bush (52) with an external thread has a greater length than the bore (54) with an internal thread.

## Revendications

1. Semoir comportant un châssis en console (14), deux disques (30) qui sont situés en vis-à-vis et ouvrent un sillon et qui sont montés, sur le châssis en console (14), sur deux axes ou arbres (32), qui se croisent, de telle sorte qu'ils divergent vers le haut et vers l'arrière à partir d'un point de contact situé en avant et au-dessous des axes (32), et comportant deux roues de jauge (36), dont l'une est voisine respectivement d'un disque (30) et tourne sur l'extrémité d'un bras oscillant (38) autour d'un axe (40), qui s'étend en arrière de l'axe associé (32) du disque et parallèlement ou approximativement parallèlement à cet axe, et dans lequel l'autre extrémité de chaque bras oscillant (38) est raccordée au châssis en console (14), caractérisé en ce que le châssis en console (14) comporte, pour le raccordement de l'autre extrémité de chaque bras oscillant (38), un arbre (50), dont l'axe est parallèle à l'axe de rotation (40) de la roue (36) de formation d'une piste et qui loge, de manière qu'il puisse tourner, un manchon (52) pourvu d'un filetage extérieur, le manchon (52) pouvant être bloqué sur l'arbre (50) contre une rotation par rapport à l'arbre (50) et le filetage extérieur du manchon (52) engrenant avec un taraudage, qui est prévu dans un perçage (54) de l'extrémité du bras articulé de la roue de jauge (36), qui peut être raccordée au châssis en console (14).

2. Semoir selon la revendication 1, caractérisé en ce que l'arbre (50), qui est utilisé pour le raccordement du bras oscillant (38) sur le châssis en console (14), comporte d'une part un filetage pour son vissage dans le châssis en console (14) ou dans l'élément de support (48) relié au châssis en console (14) et d'autre part une tête (56), qui s'applique contre le manchon (52) qui est pourvu d'un filetage extérieur et repousse ce dernier à l'état serré contre le châssis en console (14) ou l'élément de support (48).

3. Semoir selon la revendication 2, caractérisé en ce que le manchon (52), qui est pourvu d'un filetage extérieur, comporte sur son extrémité tournée vers la tête (56) de l'arbre une tête rotative (58).

4. Semoir selon la revendication 1, caractérisé en ce que le manchon (52) pourvu d'un filetage extérieur possède une longueur supérieure à celle du perçage (54) pourvu d'un taraudage.
